# EUROPÄISCHE PATENTSCHRIFT

(11) **EP 2 022 991 B1**
(45) Veröffentlichungstag und Bekanntmachung des Hinweises auf die Patenterteilung: **14.12.2011**
(21) Anmeldenummer: 08012266.6
(22) Anmeldetag: 08.07.2008
(51) Int. Cl.: F16B 13/06

(54) **Dübel, insbesondere Heizkörper-Dübel**
Dowel, in particular dowel for heating apparatus
Cheville, en particulier cheville de radiateur

(30) Priorität: 08.08.2007 DE 102007037361
(43) Veröffentlichungstag der Anmeldung: 11.02.2009
(73) Patentinhaber: TOGE-Dübel A. Gerhard KG, 90431 Nürnberg (DE); KERMI GmbH, 94447 Plattling (DE)
(72) Erfinder: Gerhard, Anton, 90427 Nürnberg (DE); Fonfara, Harald, 94551 Lalling (DE); Beer, Sabine, 84152 Mengkofen (DE); Drexler, Georg, 84326 Rimbach (DE)
(74) Vertreter: Rau, Manfred

(56) Entgegenhaltungen:
- EP-A1- 0 421 104
- DE-A1- 2 505 402
- DE-A1- 4 010 082
- DE-A1- 19 524 983
- US-A- 1 305 000

## Beschreibung

Die Erfindung betrifft einen Dübel nach dem Oberbegriff des Anspruchs 1.

Bei einem derartigen aus der DE 40 10 082 A1 bekannten Dübel ist der Doppel-Spreizkonus in der Weise ausgebildet, dass der innere Spreiz-Bereich als Innen-Konus und zwischen diesem und dem Außen-Konus ein Distanz-Abschnitt ausgebildet sind. An diesem Distanz-Abschnitt ist ein aus der Wand des Spreizkonus in dessen Innenraum abgebogenes Gewindeteil vorhanden, das ein die Spreiz-Schraube aufnehmendes Innen-Gewinde aufweist. Zur Verdrehsicherung ist aus der Wand weiterhin ein nasenförmiger Führungs-Vorsprung ausgebogen, der in einen Schlitz der Spreiz-Hülse eingreift. Obwohl dieser Dübel bereits erhebliche Fertigungsvorteile gegenüber zuvor bekannten Dübeln aufweist, ist er herstellungstechnisch noch verbesserungswürdig. Des Weiteren liegt ein Grundproblem des Einsatzes solcher Dübel, insbesondere beim Einsatz als Heizkörper-Dübel darin, dass diese manchmal in Beton oder sehr hartem Mauerwerk und manchmal in relativ weichem Mauerwerk oder gar aus Gitterziegeln bestehendem Mauerwerk eingesetzt werden. Zum Einen muss eine starke Spreizung erreichbar sein. Zum Anderen variiert der Bereich über der Länge des Dübels, an dem er, insbesondere beim Einsatz in Gitterziegeln, überhaupt greift.

Aus der DE 195 24 983 A1 ist ein Dübel mit einer Spreiz-Hülse bekannt, die im Wesentlichen zylindrisch ausgebildet ist und einstückig aus Blech gebildet ist. Sie weist mindestens einen sich über die volle Länge erstreckenden Schlitz auf. Weiterhin ist ein ebenfalls aus Blech bestehender Spreiz-Konus vorgesehen, der aus zwei einander diametral gegenüberliegenden Flügeln gebildet ist, die über einen Mittelabschnitt miteinander verbunden sind. In diesem Mittelabschnitt ist ein Innen-Gewinde ausgebildet, in das eine Spreiz-Schraube eingreift. Im Bereich des freien Endes eines der Flügel ist ein radial nach außen ragender Vorsprung angeordnet, der in den Schlitz der Spreiz-Hülse eingreift und somit als Verdrehsicherung dient. Ein Doppel-Spreiz-Effekt ist mit diesem Kantendübel nicht erreichbar.

Der Erfindung liegt daher die Aufgabe zugrunde, einen Dübel der gattungsgemäßen Art so auszugestalten, dass er bei geringstmöglichem Herstellungsaufwand große Spreiz-Variabilität über der Länge seines Spreizbereiches aufweist.

Diese Aufgabe wird erfindungsgemäß durch die Merkmale im Kennzeichnungsteil des Anspruches 1 gelöst. Durch die erfindungsgemäße Ausgestaltung wird erreicht, dass die Kräfte in den Doppel-Spreizkonus mittig über beide Flügel eingebracht werden, so dass auch ein Verbiegen des das Innen-Gewinde tragenden Mittelabschnitts ausgeschlossen ist. Dieser dient zum Einen zusammen mit den Spreiz-Stegen als Verdrehsicherung und im Bereich seiner Übergangs-Kanten zu Beginn des Spreizens im Zusammenwirken mit den Spreizstegen als Spreizelement. Die erfindungsgemäße Ausgestaltung ermöglicht es, dass die stärkste Spreizung im Bereich der Spreizstege erfolgt, so dass einerseits eine zuverlässige Halterung des Dübels in einer Wand aus hartem Material, beispielsweise Beton oder Hartbrandziegeln gewährleistet ist, andererseits aber auch ein Verspreizen und Halten in Gitterziegeln oder Porotonziegeln möglich ist.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt:

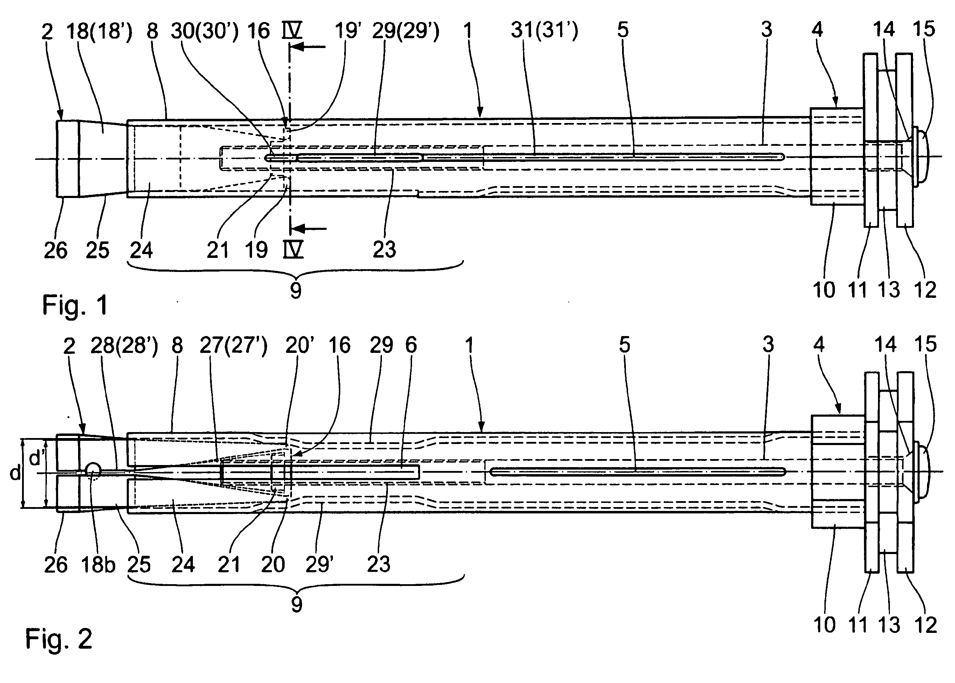

- Fig. 1: eine Längsansicht eines erfindungsgemäßen Dübels,
- Fig. 2: eine weitere Längsansicht des Dübels nach Fig. 1 in gegenüber diesem um 90° um seine Längsachse gedrehten Zustand,
- Fig. 3: eine Längsansicht des Dübels in teilweise aufgebrochenem Zu- stand,
- Fig. 4: einen Querschnitt durch den Dübel entsprechend der Schnittlinie IV-IV in Fig. 1, und
- Fig. 5: den Rohling für einen Doppel-Spreiz-Konus des Dübels.

Bei dem in der Zeichnung dargestellten Dübel handelt es sich um einen Heizkörper-Dübel. Dieser besteht aus einer im Wesentlichen zylindrischen Spreiz-Hülse 1, einem Doppel-Spreizkonus 2, einer Spreiz-Schraube 3 und einem Kopfteil 4. Die Spreiz-Hülse 1 ist in üblicher Weise aus Metallblech durch entsprechendes Rollen hergestellt, so dass sie einen sich über ihre volle Länge und parallel zu ihrer Mittel-Längs-Achse 5 erstreckenden Längsschlitz 6 aufweist. Diametral dem Längsschlitz 6 gegenüberliegend ist ein Spreizschlitz 7 in der Hülse 1 ausgebildet, der ebenfalls parallel zur Achse 5 verläuft und sich von einem Ende der Hülse 1, nämlich dem im Mauerwerk anzuordnenden Spreizende 8 über ein Drittel bis eine Hälfte der Länge der Hülse 1, im Wesentlichen also über deren Spreizbereich 9, erstreckt. Der Spreizbereich 9 erstreckt sich vom Spreizende 8 der Hülse 1 etwa über deren halbe Länge.

Das Kopfteil 4 weist einen die Hülse 1 an ihrem dem Spreizende 8 entgegengesetzten Ende umfassenden, im Wesentlichen topfförmigen Zentrier-Abschnitt 10 auf. An diesen Zentrier-Abschnitt 10 schließt sich ein innerer Mehrkant-Flansch 11 an, zwischen dem und einem äußeren Mehrkant-Flansch 12 ein exzentrisch zur Achse 5 angeordneter Auflage-Abschnitt 13 für den unteren Rand eines Heizkörpers ausgebildet ist. Durch Drehen des Kopfteils 4 mittels eines auf einen der Mehrkant-Flansche 11 bzw. 12 aufgesetzten Schrauben-Schlüssels kann hierüber in bekannter Weise ein Heizkörper in der Höhe verstellt bzw. ausgerichtet werden. Der Auflage-Abschnitt 13 kann ebenfalls ein Mehrkant-Außenprofil aufweisen, so dass eine Höhenverstellung des Heizkörpers in Stufen erfolgt.

Der stirnseitige Flansch 12 weist eine mit der Achse 5 fluchtende Öffnung 14 auf, die von der Schraube 3 durchsetzt wird. Der Kopf 15 der Schraube 3 liegt gegen den Flansch 12 an.

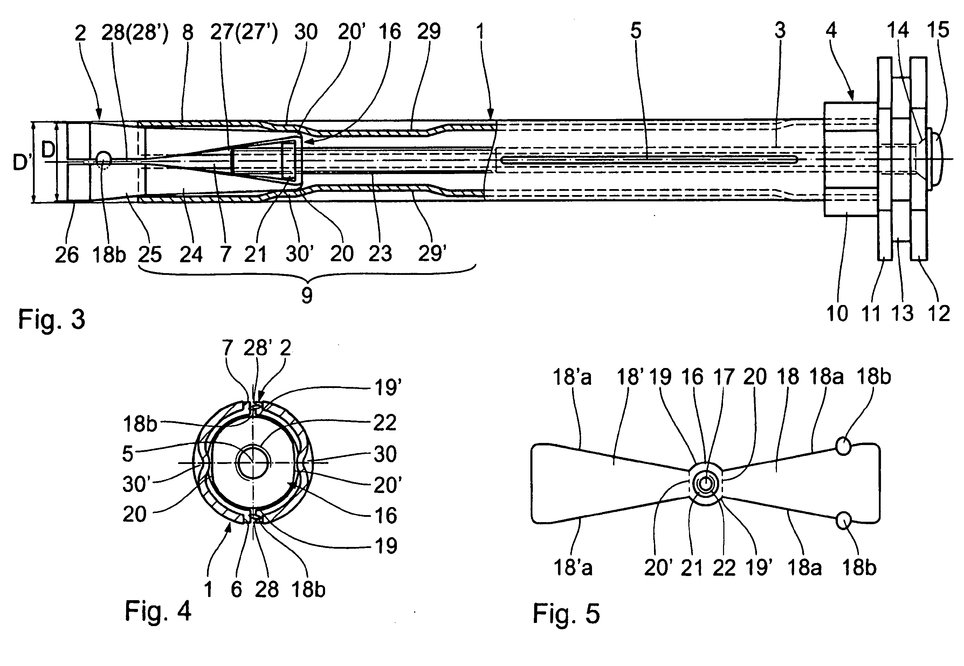

Der Doppel-Spreizkonus 2 ist einstückig aus Blech hergestellt. Der ausgestanzte Blech-Rohling hat die Form eines doppelten Propeller-Flügels, wie aus Fig. 5 hervorgeht. Er weist einen kreissegmentförmigen Mittelabschnitt 16 auf, in dem konzentrisch ein kleines Loch 17 ausgebildet ist. An den Mittelabschnitt 16 schließen sich zwei Flügel 18, 18' an, die sich vom Mittelabschnitt 16 zu ihren Enden hin etwa linear erweitern. Im Endbereich des Flügels 18 sind im Bereich von dessen beiden Längskanten 18a jeweils nach außen vorspringende Verriegelungs-Vorsprünge 18b herausgedrückt.

Im inneren Bereich der Flügel 18, 18' stehen aus dem Mittelabschnitt 16 zwei einander gegenüber liegende Kreis-Segmente 19, 19' vor. Im Bereich des Lochs 17 ist der Mittelabschnitt 16 zu einer kurzen, zur Achse 5 konzentrischen Gewinde-Hülse 21 mit einem Innen-Gewinde 22 verformt worden, das dem Außen-Gewinde 23 der Spreiz-Schraube 3 entspricht. Durch Umbiegen der beiden Flügel 18, 18' um die beiden Übergangs-Kanten 20, 20' zum Mittelabschnitt 16 hin unter gleichzeitigem Biegen der beiden Flügel 18, 18' um die Achse 5 wird der Doppel-Spreizkonus 2 gebildet. Die beiden Verriegelungs-Vorsprünge 18b greifen hierbei innen unter die durch den Flügel 18' gebildete Hälfte des Doppel-Spreizkonus 2, so dass die beiden durch die Flügel 18, 18' gebildeten Hälften des Doppel-Spreizkonus 2 unter radialer Belastung nicht ineinandergeschoben werden können, da die Längskanten 18a des Flügels 18 und die Längskanten 18' zumindest im Endbereich aufeinanderliegen und nicht gegeneinander verrutschen können.

Der fertig geformte Doppel-Spreizkonus 2 weist einen inneren, sich nur geringfügig erweiternden Spreiz-Bereich 24, einen sich an diesen anschließenden Außen-Konus 25 und einen sich wiederum an diesen anschließenden im Wesentlichen zylindrischen Abschluss-Abschnitt 26 auf. Der Außendurchmesser D des Abschluss-Abschnittes 26, der gleich dem größten Außendurchmesser des Außen-Konus 25 ist, entspricht etwa dem Außendurchmesser D' der Spreiz-Hülse. Er ist ggf. geringfügig, d. h. im Bereich von einigen wenigen Zehntel Millimetern, kleiner als D'. Damit ist sichergestellt, dass der Dübel in ungespreiztem Zustand, in dem der Abschluss-Abschnitt 26 und auch der Außen-Konus 25 über das Spreizende 8 der Spreiz-Hülse 1 vorstehen, in eine Mauerwerksbohrung eingeschoben werden kann, deren Durchmesser wiederum dem Außendurchmesser D' der Spreiz-Hülse 1 angepasst wird. Wie bereits erwähnt, liegen die Längskanten 18a und 18'a im Bereich des Abschluss-Abschnittes 26 und des Außen-Konus 25 radial quer zu der durch die Längskanten 18a und 18'a in diesem Bereich gebildeten Ebene unverschiebbar gegeneinander an.

Da der Spreiz-Bereich 24, der Außen-Konus 25 und der Abschluss-Abschnitt 26 aus den sich zu ihren Enden hin erweiternden Flügeln 18, 18' geformt werden, ist beim fertig geformten Spreiz-Konus 2 einander diametral gegenüberliegend jeweils ein etwa dreieckförmiger, sich zum Außen-Konus 25 hin verjüngender Freischnitt 27, 27' ausgebildet, der im Bereich des Mittelabschnitts 16 jeweils durch die Übergangs-Kante 20, 20' begrenzt wird. Die Freischnitte 27 gehen im Bereich des Außen-Konus 25 und des Abschluss-Abschnitts 26 in zwei einander diametral gegenüberliegende Distanz-Schlitze 28, 28' über.
Der Innen-Durchmesser d der Spreiz-Hülse 1 am Spreizende 8 ist geringfügig größer als der Außendurchmesser d' des Spreiz-Bereichs 24 am Übergang zum Außen-Konus 25, so dass in ungespreiztem Zustand der Spreiz-Hülse 1 der Doppel-Spreizkonus 2 so weit in die Spreiz-Hülse 1 hinein geschoben werden kann, dass deren Spreizende 8 gegen den Außen-Konus 25 am Übergang vom Spreiz-Bereich 24 zum Außen-Konus 25 anliegt. Entsprechend liegt der gesamte Spreiz-Bereich 24 mit geringfügigem Spiel in dem dem Spreizende 8 benachbarten Bereich der Spreiz-Hülse 1 in letzterer. In dieser Position befinden sich die Kreis-Segmente 19, 19' zwischen zwei jeweils um 90° hiergegen versetzten, einander diametral gegenüber liegenden Spreiz-Stegen 29, 29' der Spreiz-Hülse 1. Diese durch relativ tiefe Längs-Sicken in der Spreiz-Hülse 1 gebildeten Spreiz-Stege 29, 29' ragen soweit in den Innenraum der Spreiz-Hülse 1, dass die sich zwischen ihnen befindenden Kreis-Segmente 19, 19' als Verdrehsicherung dienen, die also ein Verdrehen des Doppel-Spreiz-Konus 2 gegenüber der Spreiz-Hülse 1 verhindern. Die zwischen den Kreis-Segmenten 19, 19' befindlichen und gegenüber diesen zur Achse 5 hin zurückversetzten Übergangs-Kanten 20, 20' und die sich anschließenden Bereiche des inneren Spreiz-Bereichs 24 liegen dagegen gegen eine Anfangs-Rampe 30, 30' der Spreiz-Stege 29, 29' an. Die Spreiz-Stege 29, 29' ragen soweit in das Innere der Spreiz-Hülse 1 vor, dass die Spreizwirkung zwischen dem inneren Spreiz-Bereich 24 und den Spreiz-Stegen 29, 29' größer ist als die Spreizwirkung des Außen-Konus 25 im Bereich des Spreizendes 8. Dies gilt auch insoweit, als der Doppel-Spreizkonus 2 im Bereich des Außen-Konus 25 und des Abschluss-Abschnitts 26 mit den beiden Distanz-Schlitzen 28, 28' versehen ist, die ein Zusammendrücken des Spreizkonus 2 ermöglichen.

Beim Einsetzen des Dübels in ein Loch in einer Wand und dem Einziehen des Doppel-Spreizkonus 2 unter Verdrehen der Spreiz-Schraube 3 in die Spreiz-Hülse 1 spreizt die Spreiz-Hülse 1 sich primär im Bereich der Spreiz-Stege 29 bauchig auf. Selbstverständlich wird die Spreiz-Hülse 1 auch im Bereich des Spreiz-Endes 8 durch den Außen-Konus 25 und den Abschluss-Abschnitt 26 aufgespreizt; dieser Spreizeffekt ist aber geringer als im Bereich der Spreiz-Stege 29, 29'. Wenn die Bohrung in eine Wand aus Beton oder sehr stabilem Mauerwerk eingebracht worden ist, also in sehr festes Material und wenn die Bohrung ein ausreichend exaktes Maß hat, dann erfolgt mit dem Einziehen des Spreizkonus 2 in die Spreiz-Hülse 1 ein Aufweiten der Spreiz-Hülse 1 im Bereich der Spreiz-Stege 29, wodurch eine klemmende Halterung der Spreiz-Hülse 1 primär in diesem Bereich in der Bohrung eintritt. Dieses bauchige Aufweiten der Spreiz-Hülse 1 erstreckt sich über einen längeren Bereich. Wenn dagegen die Bohrung in eine Wand aus relativ weichem Material oder insbesondere in Gitterziegel eingebracht worden ist, dann kann dieses bauchige Aufweiten soweit gehen, bis der Außen-Konus 25 und der Abschluss-Abschnitt 26 zur Anlage an den Spreiz-Stegen 29 kommen und diese aufspreizen. Damit in einem solchen Fall die Verdrehsicherung zwischen Doppel-Spreizkonus 2 und Spreiz-Hülse 1 erhalten bleibt, schließen sich an die Spreiz-Stege 29 in Richtung zu den dem Spreizende 8 entgegengesetzten Ende hin durch Längs-Sicken gebildete Führungs-Stege 31, 31' an. Diese ragen nur soweit in den Innenraum der Spreiz-Hülse 1, dass die Kreis-Segmente 19, 19' unter Verdrehsicherung seitlich gegen sie anliegen.

## Patentansprüche

1. Dübel, insbesondere Heizkörper-Dübel,
- mit einer Spreiz-Hülse (1), die
-- im Wesentlichen zylindrisch ausgebildet ist,
-- ein Spreizende (8) aufweist,
-- mindestens in einem Spreizbereich (9) mit mindestens zwei sich parallel zu einer Mittel-Längs-Achse (5) erstreckenden, einander diametral gegenüberliegender Schlitzen (6, 7) versehen ist und
-- im Spreizbereich (9) zwischen den Schlitzen (6, 7) mit zur Mittel-Längs-Achse (5) hin vorspringenden Spreiz-Stegen (29, 29') versehen ist,
- mit einem Doppel-Spreizkonus (2), der
-- einstückig aus Blech besteht,
-- konzentrisch zur Mittel-Längs-Achse (5) ein Innen-Gewinde (22) aufweist,
-- im Spreiz-Bereich (9) in der Spreiz-Hülse (1) angeordnet ist,
-- einen inneren, mit den Spreiz-Stegen (29, 29') in Eingriff bringbaren Spreiz-Bereich (24) und
-- einen Außen-Konus (25) aufweist,
- mit einer Spreiz-Schraube (3),
-- die koaxial zur Mittel-Längs-Achse (5) angeordnet ist und
-- mit einem Außen-Gewinde (23) in das Innen-Gewinde (22) des Doppel-Spreizkonus (2) eingreift und
- mit einem Kopfteil (4), das
-- als Widerlager für die Spreiz-Schraube (3) dient,
**dadurch gekennzeichnet,**
- **dass** der Doppel-Spreizkonus (2) aus zwei Flügeln (18, 18') gebildet ist, die
-- einander diametral gegenüberliegen,
-- über einen Mittelabschnitt (16) miteinander verbunden sind und
-- den inneren Spreiz-Bereich (24) und den Außen-Konus (25) bilden,
- **dass** das Innen-Gewinde (22) in dem Mittelabschnitt (16) ausgebildet ist und
- **dass** der Mittelabschnitt (16) seitlich vorspringende Segmente (19, 19') aufweist, die
-- als Verdrehsicherung zwischen die parallel zur Mittel-Längs-Achse (5) verlaufenden Spreiz-Stege (29, 29') greifen.

2. Dübel nach Anspruch 1, **dadurch gekennzeichnet,**
- **dass** der innere Spreiz-Bereich (24) mit den Spreiz-Stegen (29, 29') stärker spreizend ausgebildet ist als der Außen-Konus (25) mit dem Spreizende (8) der Spreiz-Hülse (1).

3. Dübel nach Anspruch 1 oder 2, **dadurch gekennzeichnet,**
- **dass** die Flügel (18, 18') um Übergangs-Kanten (20, 20') gegenüber dem Mittelabschnitt (16) abgebogen sind und
- **dass** die Flügel (18, 18') ausgehend von diesen Übergangs-Kanten (20, 20') mit den Spreiz-Stegen (29, 29') in Spreiz-Eingriff bringbar sind.

4. Dübel nach einem der Ansprüche 1 bis 3, **dadurch gekennzeichnet,**
- **dass** die Spreiz-Stege (29, 29') jeweils eine Anfangs-Rampe (30, 30') aufweisen.

5. Dübel nach einem der Ansprüche 1 bis 4, **dadurch gekennzeichnet,**
- **dass** sich an die Spreiz-Stege (29, 29') zum Kopfteil (4) hin Führungs-Stege (31, 31') anschließen, zwischen die die Segmente (20, 20') als Verdrehsicherung eingreifen, wenn der Außen-Konus (25) in Spreiz-Eingriff mit den Spreiz-Stegen (29, 29') ist.

6. Dübel nach einem der Ansprüche 1 bis 5, **dadurch gekennzeichnet,**
- **dass** die beiden Flügel (18, 18') im Bereich des Außen-Konus (25) mit Verriegelungs-Vorsprüngen (18b) gegen Verschiebungen quer zueinander gesichert sind.

## Claims

1. Dowel, in particular a dowel for a heating apparatus,
-- comprising a spreading sleeve (1) which
-- is designed to be essentially cylindrical,
-- comprises a spreading end (8),
-- is provided at least in one spreading section (9) with at least two diametrically opposite slots (6, 7) extending parallel to a central longitudinal axis (5) and
-- is provided in the spreading section (9) between the slots (6, 7) with spreading bars (29, 29') projecting towards the central longitudinal axis (5),
- comprising a double spreading cone (2) which
-- is made in one piece of sheet meal,
-- comprises an internal thread (22) concentrically to the central longitudinal axis (5),
-- is arranged in the spreading section (9) in the spreading sleeve (1),
-- comprises an inner spreading section (24) which can be brought into engagement with the spreading bars (29, 29') and
-- an external cone (25),
- comprising a spreading screw (3)
-- which is arranged coaxially to the central longitudinal axis (5) and
-- engages with an external thread (23) in the internal thread (22) of the double spreading cone (2) and
- comprising a head part (4) which
-- is used as an abutment for the spreading screw (3),
**characterised in that**
- the double spreading cone (2) is formed by two wings (18, 18') which
-- are diametrically opposite one another,
-- are joined together via a middle section (16) and
-- form the inner spreading area (24) and the external cone (25),
- **in that** the internal thread (22) is formed in the middle section (16) and
- **in that** the middle section (16) comprises laterally projecting segments (19, 19') which
-- grip as a twist lock between the spreading bars (29, 29') running parallel to the central longitudinal axis (5).

2. Dowel according to claim 1, **characterised in that**
- the inner spreading section (24) with the spreading bars (29, 29') are designed to spread more widely than the external cone (25) with the spreading end (8) of the spreading sleeve (1).

3. Dowel according to claim 1 or 2, **characterised in that**
- the wings (18, 18') are bent around transitional edges (20, 20') opposite the middle section (16) and
- **in that** the wings (18, 18') from said transitional edges (20, 20') can be brought into spreading engagement with the spreading bars (29, 29').

4. Dowel according to one of claims 1 to 3, **characterised in that** the spreading bars (29, 29') respectively comprise an initial ramp (30, 30').

5. Dowel according to one of claims 1 to 4, **characterised in that**
- guiding bars (31, 31') join the spreading bars (29, 29') towards the head part (4), between which guiding bars the segments (20, 20') engage as a twist lock when the external cone (25) is in spreading engagement with the spreading bars (29, 29').

6. Dowel according to one of claims 1 to 5, **characterised in that**
- in the region of the external cone (25) the two wings (18, 18') are secured by locking projections (18b) against displacements transversely to one another.

## Revendications

1. Cheville, en particulier cheville de radiateur,
- comprenant un manchon d'écartement (1) qui
-- est conçu dans l'essentiel de forme cylindrique,
-- présente une extrémité d'écartement (8),
-- est muni d'au moins deux fentes (6, 7) disposées diamétralement l'une par rapport à l'autre, s'étirant parallèlement par rapport à un axe longitudinal central (5) dans au moins une zone d'écartement (9), et
-- est muni de nervures d'écartement (29, 29') faisant saillie par rapport à l'axe longitudinal central (5) entre les fentes (6, 7) dans la zone d'écartement (9),
- comprenant un cône d'écartement double (2) qui
-- est constitué de tôle en une seule pièce,
-- présente un filetage interne (22) concentriquement par rapport à l'axe longitudinal central (5)
-- est disposé dans le manchon d'écartement (1) dans la zone d'écartement (9),
-- présente une zone d'écartement (24) interne qui peut être mise en contact avec les nervures d'écartement (29, 29') et
-- présente un cône externe (25),
- comprenant une vis d'écartement (3),
-- qui est disposée coaxialement par rapport à l'axe longitudinal central (5) et
-- qui comporte un filetage externe (22) qui entre en contact avec le filetage interne (22) du cône d'écartement double (2) et
- comprenant une partie de tête (4) qui
-- sert de butée pour la vis d'écartement (3), **caractérisée en ce**
- **que** le cône d'écartement double (2) est formé par deux ailerons (18, 18'), qui
-- se situent diamétralement opposés l'un à l'autre,
-- sont reliés par une partie centrale (16) et
-- forment la zone d'écartement interne (24) et le cône externe (25),
- **que** le filetage interne (22) est formé dans la partie centrale (16) et
- **que** la partie centrale (16) présente sur les côtés des segments proéminents (19, 19') qui
-- s'accrochent dans les nervures d'écartement s'étirant parallèlement à l'axe longitudinal central (5) pour assurer la sécurisation anti-rotation.

2. Cheville selon la revendication 1 **caractérisée en ce**
- **que** la zone d'écartement interne (24) est conçue pour s'écarter plus fortement avec les nervures d'écartement (29, 29') que le cône externe (25) comportant le manchon d'écartement (1) de l'extrémité d'écartement (8).

3. Cheville selon les revendications 1 ou 2 **caractérisée en ce**
- **que** les ailerons (18, 18') sont recourbés pardessus les arêtes de transition (20, 20') par rapport à la partie centrale (16) et
- **que** les ailerons (18, 18') peuvent être pris dans un accrochage en écartement avec les nervures d'écartement (29, 29') à partir de ces arêtes de transition (20, 20').

4. Cheville selon l'une des revendications de 1 à 3 **caractérisée en ce**
- **que** les nervures d'écartement (29, 29') présentent chacune une rampe d'amorçage (30, 30').

5. Cheville selon l'une des revendications de 1 à 4 **caractérisée en ce**
- **que** les nervures d'écartement (29, 29') se poursuivent par des nervures de guidage (31, 31') jusqu'à la partie de tête (4), entre lesquelles les segments (20, 20') sont en prise en tant que sécurités anti-rotation, lorsque le cône externe (25) est pris dans un accrochage en écartement avec les nervures d'écartement (29, 29').

6. Cheville selon l'une des revendications de 1 à 5 **caractérisée en ce**
- **que** les deux ailerons (18, 18') sont sécurisés avec des saillies de verrouillage (18b) contre des décalages perpendiculaires de l'un par rapport à l'autre dans la zone du cône externe (25).
